# EUROPEAN PATENT APPLICATION

(11) **EP 1 956 056 A2**
(43) Date of publication of application: **13.08.2008**
(21) Application number: 07024697.0
(22) Date of filing: 20.12.2007
(51) Int. Cl.: C09D 5/44, C08G 18/80

(54) **Cathodic electrodeposition coating composition**

(30) Priority: 09.02.2007 US 900547 P
(71) Applicant: E.I. DU PONT DE NEMOURS AND COMPANY, Wilmington DE 19898 (US)
(72) Inventor: Hermann, Ulrich, 8610 Uster (CH); Schipfer, Rudolf, 8010 Graz (AT); Matzer, Herbert, Deceased (AT); Zach, Karin (Gurardian), 8042 Graz (AT)
(74) Representative: DuPont Performance Coatings Biering/Blum/Kimpel

(57) **Abstract**

CED coating compositions comprising water, at least one monobasic acid, a resin solids content comprising a thermally crosslinkable binder system comprising (i1) at least one self-crosslinkable CED binder with isocyanate-reactive functional groups and oxime- and/or N,N-dialkyl hydroxylamine-blocked aromatic isocyanate groups and/or (i2) at least one externally crosslinkable CED binder with isocyanate-reactive functional groups and, as a crosslinking agent A, at least one polyisocyanate with oxime- and/or N,N-dialkyl hydroxylamine-blocked aromatic isocyanate groups, and at least one polybasic acid in a proportion of 1 to 50 meq acid per 100g of resin solids.

## Description

### Field of the Invention

The invention relates to cathodic electrodeposition ("CED") coating compositions.

### Background of the Invention

The majority of the CED coating compositions currently employed contain cathodically depositable binders having functional groups comprising active hydrogen, for example hydroxyl groups, primary and/or secondary amino groups, and blocked polyisocyanates as the crosslinking agents (curing agents).

For reasons of conserving energy, there has been a desire, in particular in the automotive industry, to obtain CED coating compositions that can be bake cured at low temperatures.

CED coating compositions that are curable at a low baking temperature and contain cathodically depositable binders that are curable with blocked polyisocyanates, and oxime-blocked aromatic polyisocyanates (polyisocyanates having isocyanate groups which are bonded to aromatic rings and are blocked with oximes) as the curing agents, are for example known from EP-A-0 199 663, US 4,596,744, US 4,872,961, US 5,096,555 and US 5,461,091. The CED materials disclosed therein are chemically unstable. They undergo to a certain extent a decomposition that surprisingly creates no adverse effects in CED coating, but creates problems during transport and storage of the CED materials. During the decomposition, a pressure build-up occurs within the containers containing the CED coating compositions. The speed of the decomposition process depends in particular on the temperature and may lead to an accelerated pressure build-up at high temperatures. The handling of these CED coating compositions in open containers is not allowed under applicable legal restrictions and also for practical reasons. Although the use of pressure containers or pressure compensation containers could be a possible solution for the problem, these CED coating compositions have not been successful, however, in practice because of the requirements involved.

US 2006/0106188 A1 discloses CED coating compositions comprising polyisocyanate crosslinking agents blocked with N,N-dialkyl hydroxylamine. In case of N,N-dialkylhydroxyl amine-blocked aromatic polyisocyanates the corresponding CED coating compositions suffer the same kind of chemical instability as is described in the preceding paragraph for the CED coating compositions comprising oxime-blocked aromatic polyisocyanate crosslinking agents.

WO 02/40605 discloses a two-component concentrate for the preparation of a low bake CED coating composition, the first component being an aqueous component comprising the CED binder and the second component being an anhydrous crosslinking component comprising an oxime-blocked aromatic polyisocyanate crosslinking agent, thus allowing for keeping separate the oxime-blocked aromatic polyisocyanate from water as long as possible.

The object of the invention is to provide CED coating compositions which are curable at a low baking temperature, and which overcome the aforementioned problems.

### Summary of the Invention

The invention relates to CED coating compositions which, apart from water and at least one monobasic acid, comprise (i) a resin solids content comprising a thermally crosslinkable binder system and the optional components: paste resins (grinding resins) and nonionic resins, and (ii) optionally, at least one component selected from the group consisting of pigments, fillers (extenders), paint additives and organic solvents,
wherein the thermally crosslinkable binder system comprises (i1) at least one self-crosslinkable CED binder with isocyanate-reactive functional groups and isocyanate groups directly attached to an aromatic ring (aromatic isocyanate groups) and blocked with at least one blocking agent selected from the group consisting of oximes and N,N-dialkyl hydroxylamines and/or (i2) at least one externally crosslinkable CED binder with isocyanate-reactive functional groups and, as a crosslinking agent A, at least one polyisocyanate with isocyanate groups directly attached to an aromatic ring and blocked with at least one blocking agent selected from the group consisting of oximes and N,N-dialkyl hydroxylamines,
wherein the CED coating compositions comprise at least one polybasic acid in a proportion of 1 to 50 meq (milliequivalents) acid per 100g of resin solids.

### Detailed Description of the Embodiments

The term "isocyanate-reactive functional groups" is used in the description and the claims. It refers to functional groups capable of reaction, in particular, addition reaction with free isocyanate groups which can be liberated from blocked isocyanate groups with elimination of the blocking agent on supply of thermal energy, for example, during bake curing. Examples of isocyanate-reactive functional groups comprise functional groups with active hydrogen, in particular, hydroxyl groups, secondary amino groups, primary amino groups and any combinations thereof.

The CED coating compositions according to the invention are aqueous coating compositions with a solids content (non-volatile content) of, for example, 10 to 30 wt.%. The solids content comprises the resin solids content, the at least one polybasic acid, and the following in each case optional components: pigments, fillers and non-volatile paint additives. Water, optionally present organic solvents and optionally present volatile additives form the volatile constituents. Depending on its physical properties, the at least one monobasic acid mentioned above and used as neutralizing agent may belong to the solids or to the volatile constituents.

The resin solids content comprises the thermally crosslinkable binder system, optionally present paste resins and optionally present nonionic resins. Preferably, the resin solids content consists of the thermally crosslinkable binder system, optionally present paste resins and optionally present nonionic resins. The thermally crosslinkable binder system comprises (i1) at least one self-crosslinkable CED binder with isocyanate-reactive functional groups and isocyanate groups directly attached to an aromatic ring and blocked with at least one blocking agent selected from the group consisting of oximes and N,N-dialkyl hydroxylamines (in the following also "oxime- and/or N,N-dialkyl hydroxylamine-blocked aromatic isocyanate groups" for short) or (i2) at least one externally crosslinkable CED binder with isocyanate-reactive functional groups and, as a crosslinking agent A, at least one polyisocyanate with oxime- and/or N,N-dialkyl hydroxylamine-blocked aromatic isocyanate groups or (i3) a combination of (i1) and (i2). To avoid misunderstandings: the term "oxime- and/or N,N-dialkyl hydroxylamine-blocked aromatic isocyanate groups" used for brevity purposes shall not be misunderstood and does of course not include the situation that one and the same aromatic isocyanate group can be blocked simultaneously with an oxime and with an N,N-dialkyl hydroxylamine; rather, it includes the possibility of blocking some of a multiplicity of aromatic isocyanate groups within a polyisocyanate molecule with oxime and some with N,N-dialkyl hydroxylamine.

In case (i1) the thermally crosslinkable binder system may comprise external crosslinking agents A and/or B as well. In case (i2) and (i3) one or more external crosslinking agents B may be comprised. The crosslinking agents B are different from the crosslinking agents A. Both types of crosslinking agents will be explained in greater detail below.

CED coating compositions comprising a thermally crosslinkable binder system of type (i2) are preferred, in particular those comprising only a thermally crosslinkable binder system of type (i2).

The thermally crosslinkable binder system may be comprised of, for example, 50 wt.% to 100 wt.% of CED binder(s) and 0 wt.% to 40 wt.% of crosslinking agent(s) A and/or B, wherein the weight percentages add up to 100 wt.%. Preferably it is comprised of 50 wt.% to 90 wt.% of externally crosslinkable CED binder(s) and 10 wt.% to 40 wt.% of crosslinking agent(s) A and optionally B, wherein the weight percentages add up to 100 wt.%.

The CED binders have cationic substituents and/or substituents which can be converted into cationic groups. The CED binders' cationic groups or groups which can be converted into cationic groups may be, for example, basic groups, preferably basic groups containing nitrogen; these groups may be present in quaternized form or they are converted into cationic groups with a monobasic acid neutralizing agent conventional for CED coating compositions, such as, for example, lactic acid, formic acid, acetic acid, methanesulfonic acid. Examples are imino, amino, ammonium, for example, quaternary ammonium, phosphonium and/or sulfonium groups. Amino groups present may be primary, secondary and/or tertiary. The CED binders are preferably resins containing amino groups, preferably tertiary amino groups, the total amine value of which is 20 to 150, preferably 50 to 100 mg KOH/g. The weight average molar mass (Mw) of the CED binders is preferably about 300 to 10000.

All the number or weight average molar mass data stated in the present description are determined or to be determined by gel permeation chromatography (GPC; divinylbenzene-crosslinked polystyrene as the immobile phase, tetrahydrofuran as the liquid phase, polystyrene standards).

The CED binders contain isocyanate-reactive functional groups, such as, for example, primary amino groups, secondary amino groups and, in particular, hydroxyl groups. Combinations of these groups may be present in the same CED binder, but preferably there are no primary or secondary amino groups apart from the hydroxyl groups. The proportion of said functional groups in the CED binders corresponds to an active hydrogen value of, for example, 30 to 300 mg KOH/g, preferably, 50 to 300 mg KOH/g, corresponding to a sum of primary amine value, secondary amine value and hydroxyl value. The hydroxyl value is typically in the range of, for example, 30 to 250 mg KOH/g, in particular 50 to 250 mg KOH/g. The CED binders may be converted to the aqueous phase after quaternization or neutralization of at least a part of the basic groups.

CED binders suitable for use in the present invention are known to the person skilled in the art. Examples include binders, such as, amino(meth)acrylic resins, aminopolyurethane resins, amino group-containing polybutadiene resins, epoxy resin-carbon dioxyde-amine-reaction products and in particular aminoepoxy resins, for example, aminoepoxy resins having primary OH-groups.

The term "(meth)acryl" used in the present description and the claims means acryl and/or methacryl.

The CED binders may be converted into an aqueous dispersion according to methods known to those skilled in the art. For example, the CED binders may be neutralized with monobasic acid and diluted with water. Organic solvents that may be present can be removed (or eliminated) by vacuum distillation or other known method. It is also possible to prepare the CED binders in a way to minimize the presence of organic solvents, such as neutralizing with monobasic acid in the low-solvent state or as a solvent-free melt and then diluting with water to make the dispersion. In a further alternative, the CED binders can also be neutralized with monobasic acid as a solution in an olefinically unsaturated monomer capable of free-radical polymerization, and then be converted into an aqueous dispersion by diluting with water, followed by a subsequent free-radical polymerization.

The binder system of the CED coating compositions is crosslinkable by the addition reaction between the isocyanate-reactive functional groups of the CED binders and free isocyanate groups which are released from the oxime- and/or N,N-dialkyl hydroxylamine-blocked aromatic isocyanate groups with elimination of the blocking agent(s) on supply of heat, for example, during bake curing.

The oxime- and/or N,N-dialkyl hydroxylamine-blocked aromatic isocyanate groups may be introduced into the self-crosslinkable CED binders, for example, by partially blocking the isocyanate groups of an aromatic polyisocyanate with oxime- and/or N,N-dialkyl hydroxylamine and then reacting the partially blocked aromatic polyisocyanate with a CED binder comprising a stoichiometric excess of isocyanate-reactive functional groups.

The preferred CED coating compositions comprising a thermally crosslinkable binder system of type (i2) comprise at least one crosslinking agent A, i.e., in particular, an oxime- and/or N,N-dialkyl hydroxylamine-blocked aromatic polyisocyanate. The crosslinking agents A comprise, for example, 8 to 20 wt.% of oxime- and/or N,N-dialkyl hydroxylamine-blocked aromatic isocyanate groups, calculated as NCO (molecular mass NCO = 42). The crosslinking agents A may comprise cationic groups or groups convertible into cationic groups.

The crosslinking agents A can be prepared by reacting one or more aromatic polyisocyanates with at least one monofunctional blocking agent selected from the group consisting of oximes and N,N-dialkyl hydroxylamines.

Examples of aromatic polyisocyanates suitable for preparing the crosslinking agents A are aromatic diisocyanates (diisocyanates having at least one isocyanate group directly bonded to an aromatic ring) such as phenylene, toluylene, xylylene or naphthylene diisocyanate and in particular diphenylmethane diisocyanate, each being either in the form of the isomeric mixture or of pure isomers. Further examples are polyisocyanates derived from the aromatic diisocyanates, for example oligomers of the aromatic diisocyanates or isocyanurate or uretdione derivatives of the aromatic diisocyanates or isocyanate-functional adducts of aromatic diisocyanates and compounds having at least two groups containing active hydrogen per molecule, in particular, polyols, polyamines and/or aminoalcohols, such as, for example, ethylene glycol, trimethylolpropane, glycerin, neopentyl glycol, hexanediol, ethylene diamine, diethylene triamine, dimethylaminopropylamine, ethanolamine, methyl ethanolamine and 1:1-adducts of dialkanolamines and cyclic carbonate.

Examples of oximes suitable as blocking agents are aldoximes or in particular ketoximes such as acetone oxime, cyclohexanone oxime and in particular butanone oxime.

Suitable N,N-dialkyl hydroxylamine blocking agents comprise preferably 3 to 8 carbon atoms and they may at the same time comprise two different or two identical alkyl groups which are selected from the group consisting of C1- to C4-alkyl radicals. N,N-diethyl hydroxylamine is preferred.

The aromatic isocyanate groups are blocked completely and preferably exclusively with one, two or more oximes and/or one, two or more N,N-dialkyl hydroxylamines, preferably, only a single one thereof. If desired, up to 80%, preferably no more than 50%, of the blocked aromatic isocyanate groups may be blocked with at least one other monofunctional blocking agent, i.e. blocking agents different from oximes and N,N-dialkyl hydroxylamines. Examples for such other blocking agents are CH-acidic compounds, such as, acetylacetone, acetoacetic acid alkyl esters, malonic acid dialkyl esters; aliphatic or cycloaliphatic alcohols, such as, n-butanol, 2-ethylhexanol, cyclohexanol; glycol ethers, such as, ethylene glycol monobutylether; phenols; lactams, such as, caprolactam; azole blocking agents of the imidazole, pyrazole, triazole or tetrazole type.

The coblocking reaction may proceed as a single stage process, in which all the blocking agents are simultaneously reacted with the aromatic polyisocyanate, or as a multistage process, for example, by initially performing partial blocking with oxime and/or N,N-dialkyl hydroxylamine and then reacting any remaining free aromatic isocyanate groups with at least one further blocking agent or the co-blocking may be performed in the reverse order.

It goes without saying, that all the reactions required for the production of the crosslinking agents A which involve free isocyanate groups proceed, of course, in the absence of water and solvents comprising active hydrogen. Such reactions are accordingly performed without solvent, for example, in a melt, or in solvents which contain no active hydrogen. Examples of suitable solvents are N-methylpyrrolidone; dimethylformamide; ketones, such as, acetone, methyl ethyl ketone, cyclohexanone; esters, such as, butyl acetate and ethyl acetate. Once blocking is complete, solvents containing active hydrogen may also be added and/or inert solvent may be removed, for example, by (vacuum) distillation at sufficiently low temperatures, which do not permit any elimination of blocking agent from the blocked aromatic isocyanate groups.

As mentioned above, the CED coating compositions may comprise crosslinking agents B different from A. Examples include aminoplast resins (amine/formaldehyd resins), crosslinking agents having terminal double bonds, crosslinking agents having cyclic carbonate groups, polyepoxy compounds, crosslinking agents containing groups capable of transesterification and/or transamidization, but also blocked polyisocyanates without aromatic isocyanate groups (with isocyanate groups not directly attached to an aromatic ring, for example, aliphatic isocyanate groups) and/or polyisocyanates that are blocked only by blocking agents different from oxime and N,N-dialkyl hydroxylamine. Examples for such blocking agents are those already stated above.

As mentioned above, the CED coating compositions may comprise non-ionic resins. Examples of non-ionic resins are (meth)acrylic copolymer resins, polyester resins and polyurethane resins. The non-ionic resins preferably have functional groups, particularly crosslinkable functional groups. Particularly preferably they are the same crosslinkable functional groups as the CED binders of the CED coating compositions also contain. Preferred examples of such functional groups are hydroxyl groups. Accordingly the non-ionic resins are preferably polymer polyols.

The CED coating compositions comprise at least one polybasic acid in a proportion of 1 to 50, preferably 2 to 25, most preferably 4 to 20 meq (milliequivalents) acid per 100 g of resin solids (corresponds to 1 to 50, preferably 2 to 25, most preferably 4 to 20 mmol of H⁺ per 100 g of resin solids at 100% dissociation of the polybasic acid's acid groups). Addition of the polybasic acid in the stated proportion leads to an unexpected increase in stability of the oxime- and/or N,N-dialkyl hydroxylamine-blocked aromatic isocyanate groups in the aqueous CED coating compositions.

Suitable polybasic acids may be found, for example, among inorganic polybasic acids and di- and polycarboxylic acids. Preferred polybasic acids comprise boric acid, phosphoric acid, oxalic acid, citric acid and tartaric acid. Boric acid and phosphoric acid are most preferred.

The at least one polybasic acid may be introduced into the CED coating compositions as a constituent of a CED binder dispersion or of a pigment paste, or it may be added as such or as an organic or aqueous preparation, for example, a solution, to the CED coating compositions. It is, for example, possible to carry out the addition to CED coating baths ready for coating.

In addition to the resin solids content, water, monobasic acid and the at least one polybasic acid, the CED coating compositions may comprise pigments, fillers, solvents and/or paint additives.

Examples of pigments are the conventional inorganic and/or organic colored pigments and/or special effect pigments, such as, titanium dioxide, iron oxide pigments, carbon black, phthalocyanine pigments, quinacridone pigments, metal pigments, such as, for example, titanium, aluminum or copper pigments, interference pigments, such as, for example, titanium dioxide-coated aluminum, coated mica, platelet-like iron oxide, platelet-like copper phthalocyanine pigments. Examples of fillers are kaolin, talcum or silicon dioxide. The CED coating compositions may also comprise anti-corrosive pigments, such as, for example, zinc phosphate or organic corrosion inhibitors. The type and quantity of the pigments depends on the proposed application of the CED coating compositions. If clear coatings are to be obtained, then no or only transparent pigments, such as, for example, micronized titanium dioxide or silicon dioxide are used. If opaque coatings are to be obtained, then the CED coating compositions preferably comprise coloring pigments.

The pigments and/or fillers may be dispersed in a portion of the non-aqueous CED binder and then ground in suitable equipment, for example, a pearl mill, after which completion takes place by mixing with the remaining proportion of CED binder. After addition of monobasic acid neutralizing agent - if this has not already taken place - the CED coating composition or bath may then be produced from this material by dilution with water (one-component method).

Pigmented CED coating compositions or baths may also be prepared by mixing a CED binder dispersion and a separately prepared pigment paste (two-component method). To this end, for example, a CED binder dispersion is diluted further with water and an aqueous pigment paste is then added. Aqueous pigment pastes are prepared by methods known to the skilled person, preferably by dispersing the pigments and/or fillers in paste resins conventionally used for these purposes and known to the skilled person. Examples of paste resins which can be used in CED coating compositions are described, for example, in US 4,683,285 and CA 2 048 320.

The pigment plus filler/resin solids weight ratio of the CED coating compositions is, for example, 0 : 1 to 0.8 : 1; for pigmented CED coating compositions it is preferably from 0.05 : 1 to 0.4 : 1.

The CED coating compositions may comprise conventional solvents in conventional proportions of, for example, 0 to 5 wt.%, based on the CED coating bath ready for coating. Examples of such solvents include glycol ethers, such as, butyl glycol, butyl diglycol, butyl triglycol, ethyl glycol, hexyl glycol, phenoxypropanol, methoxypropanol and ethoxypropanol; alcohols, such as butanol and 2-ethylhexanol; ketones, such as methyl isobutylketone, cyclohexanone and methyl ethylketone; propylene carbonate. The solvents may be introduced into the CED coating compositions in any manner, for example, as a constituent of a CED binder, of a crosslinking agent, of a pigment paste or by separate addition.

The CED coating compositions may comprise conventional paint additives, for example, in quantity proportions from 0.1 wt.% to 5 wt.%, based on the resin solids. These are, in particular, those of the kind known for CED coating compositions, for example, wetting agents, leveling agents, catalysts, corrosion inhibitors, antifoaming agents, light stabilizers, antioxidants, biocides and anti-cratering additives. The additives may be introduced into the CED coating compositions in any manner, for example, during CED binder synthesis, during the preparation of the CED binder dispersions, by way of a pigment paste, or separately.

As mentioned above, the CED coating compositions according to the invention may be prepared by the known methods for the preparation of CED coating baths, i.e., in principle both by means of the one-component and by means of the two-component method described above.

During the preparation of the CED coating compositions by the one-component method the non-aqueous constituents of the CED coating composition, in particular the non-aqueous CED binder(s), optionally, in combination with crosslinker(s) A and/or B, are converted to the aqueous phase by dilution with water. In the case of pigmented CED coating compositions, the process steps described above in relation to the one-component method may be performed.

During the preparation of the CED coating compositions by the two-component method the non-aqueous CED binder(s), optionally, in combination with crosslinker(s) A and/or B, is/are converted to the aqueous phase - after the addition of monobasic acid neutralizing agent, unless this has already been done - by dilution with water. A CED binder dispersion is thus obtained. A pigmented CED coating composition or bath may then be prepared from the CED binder dispersion thus obtained by mixing with a separate pigment paste.

Also possible, for example, is the formulation of the CED coating compositions as a multi-component system comprising an aqueous CED binder dispersion and a non-aqueous preparation of the crosslinking agent A, wherein each of the two components may be pigmented or wherein a separate pigment paste may be added as a further component. On mixing the components and dilution with water the CED coating compositions may be prepared.

The CED coating compositions according to the invention are distinguished by elevated stability, more precisely, by elevated stability of the oxime- and/or N,N-dialkyl hydroxylamine-blocked aromatic isocyanate groups which are comprised by the CED coating compositions' binder systems.

CED coating layers can be cathodically electrodeposited in conventional manner from the CED coating compositions in a dry layer thickness of, for example, 5 to 50 µm, in particular, 10 to 35 µm, onto electrically conductive substrates, in particular metal substrates, such as, automotive bodies and body parts, and can be thermally cured at low baking temperatures of, for example, 100 to 150°C object temperature. Higher baking temperatures of, for example, up to 200°C object temperature are of course also possible.

The CED coating layers may be applied and baked, for example, as a single layer coating or as a coating layer within a multilayer coating. The CED coating compositions according to the invention are particularly suitable in the automotive sector, in particular for the anti-corrosive priming of automotive parts, automotive bodies or automotive body parts. The CED primer layers may optionally be provided with further coating layers. The CED coating compositions according to the invention may, however, also be cathodically deposited and baked, for example, as a top coat, a clear coat or as a coating layer which is arranged within a multilayer coating and may have a decorative function.

### EXAMPLES

### Example 1 (preparation of an aqueous dispersion of a CED binder)

A mixture of 666g methoxypropanol, 319g bisphenol A, 591g of an adduct of 2 mol epoxy resin (based on bisphenol A / epichlorhydrine; epoxy equivalent weight 190) and 1 mol polypropylene glycol 400 and 886g epoxy resin (based on bisphenol A / epichlorhydrine; epoxy equivalent weight 190) was heated to 45°C and stirred for 1 hour. 121g diethanolamine and 81.5g dimethyl aminopropylamine were then added and the batch was stirred for 2 hours at 125°C. The methoxypropanol was then distilled off under vacuum and the batch was diluted with 240g hexyl glycol. After cooling to 95°C and stirring for 30 minutes at 95°C, 48g aqueous formic acid at 50 wt.% were added and the batch was stirred for 30 minutes. The batch was then converted into an aqueous dispersion having a solids content of 37.5 wt.% by adding deionized water.

### Example 2a (preparation of a crosslinking agent A1 with butanone oxime-blocked aromatic isocyanate groups)

750g Desmodur® VL (from Bayer, polyisocyanate based on diphenylmethane diisocyanate having a NCO-content of 33.6 wt.%) were dissolved in 317g methyl isobutylketone and 405g butanone oxime were added evenly at 25°C while stirring and cooling, wherein a temperature of 35°C was not exceeded. 52g of an adduct of 1 mol propylene carbonate and 1 mol diethanolamine were then added over a period of 30 minutes, wherein the temperature rose to 60°C. 61g dimethyl aminopropylamine were added while further stirring, cooling and keeping a temperature not exceeding 75°C. The batch was stirred for 1 hour. The batch was then diluted with 218g propylene carbonate and neutralized while adding 34.2g pure acetic acid.

### Example 2b (preparation of a crosslinking agent A2 with diethyl hydroxylamine-blocked aromatic isocyanate groups):

Example 2a was repeated with 414g diethyl hydroxylamine instead of the 405g butanone oxime. During the blocking reaction the reaction temperature did not exceed 50°C.

### Example 3a (preparation of a comparative CED clear coat)

The CED binder dispersion from Example 1 was mixed with the solution of the crosslinking agent A1 from Example 2a in a solids weight ratio of 70 parts CED binder: 30 parts crosslinking agent A1. This mixture was diluted with deionized water to a CED clear coat having a solids content of 20 wt.%. 1 liter of this mixture was filled into a two-liter-plastic bottle which was closed thereafter. After a storage period of two days at room temperature the plastic bottle was clearly distended.

### Examples 3b to 3c (preparation of CED clear coats according to the invention)

Example 3a was repeated several times wherein in each case 0.3 wt.% of a polybasic acid per 100 g of resin solids was added and thoroughly mixed into the 20 wt.% mixture.

### Example 4a (preparation of a comparative CED clear coat)

Example 3a was repeated except that crosslinking agent A2 from Example 2b was used instead of crosslinking agent A1. Distension of the plastic bottle could be observed after a storage period of two days.

### Examples 4a to 4f (preparation of CED clear coats according to the invention)

Example 4a was repeated several times wherein in each case 0.3 wt.% of a polybasic acid per 100 g of resin solids was added and thoroughly mixed into the 20 wt.% mixture.

Table 1 shows which polybasic acid was used in Examples 3 to 4 and the storage period after which distension of the plastic bottle could be observed.

**TABLE 1**

| Example | polybasic acid added | distension of the plastic bottle after |
|---|---|---|
| 3a | ./. | 2 days |
| 3b | boric acid | > 12 weeks |
| 3c | phosphoric acid | > 8 weeks |
| 4a | ./. | 2 days |
| 4b | boric acid | > 10 weeks |
| 4c | oxalic acid | > 6 weeks |
| 4d | citric acid | > 1 week |
| 4e | phosphoric acid | > 5 weeks |
| 4f | tartaric acid | > 3 weeks |

## Claims

1. CED coating compositions which, apart from water and at least one monobasic acid, comprise (i) a resin solids content comprising a thermally crosslinkable binder system and the optional components: paste resins and nonionic resins, and (ii) optionally, at least one component selected from the group consisting of pigments, fillers, paint additives and organic solvents,
wherein the thermally crosslinkable binder system comprises (i1) at least one self-crosslinkable CED binder with isocyanate-reactive functional groups and isocyanate groups directly attached to an aromatic ring and blocked with at least one blocking agent selected from the group consisting of oximes and N,N-dialkyl hydroxylamines or (i2) at least one externally crosslinkable CED binder with isocyanate-reactive functional groups and, as a crosslinking agent A, at least one polyisocyanate with isocyanate groups directly attached to an aromatic ring and blocked with at least one blocking agent selected from the group consisting of oximes and N,N-dialkyl hydroxylamines or (i3) a combination of (i1) and (i2),
wherein the CED coating compositions comprise at least one polybasic acid in a proportion of 1 to 50 meq acid per 100g of resin solids.

2. The CED coating compositions of claim 1, wherein the isocyanate-reactive functional groups are selected from the group consisting of hydroxyl groups, secondary amino groups, primary amino groups and any combination thereof.

3. The CED coating compositions of claim 1 or 2, wherein the thermally crosslinkable binder system comprises 50 wt.% to 100 wt.% of at least one CED binder and 0 wt.% to 40 wt.% of at least one crosslinking agent selected from the group consisting of crosslinking agents A and crosslinking agents B, wherein the weight percentages add up to 100 wt.%, wherein "crosslinking agent A" means a polyisocyanate with isocyanate groups directly attached to an aromatic ring and blocked with at least one blocking agent selected from the group consisting of oximes and N,N-dialkyl hydroxylamines and wherein "crosslinking agent B" means a crosslinking agent different from a crosslinking agent A.

4. The CED coating compositions of claim 1 or 2, wherein the thermally crosslinkable binder system comprises of 50 wt.% to 90 wt.% of at least one CED binder and 10 wt.% to 40 wt.% of at least one crosslinking agent selected from the group consisting of crosslinking agents A and crosslinking agents B, wherein the weight percentages add up to 100 wt.%, wherein "crosslinking agent A" means a polyisocyanate with isocyanate groups directly attached to an aromatic ring and blocked with at least one blocking agent selected from the group consisting of oximes and N,N-dialkyl hydroxylamines and wherein "crosslinking agent B" means a crosslinking agent different from a crosslinking agent A.

5. The CED coating compositions of any one of the preceding claims comprising the at least one polybasic acid in a proportion of 2 to 25 meq acid per 100 g of resin solids.

6. The CED coating compositions of any one of claims 1 to 4 comprising the at least one polybasic acid in a proportion of 4 to 20 meq acid per 100 g of resin solids.

7. The CED coating compositions of any one of the preceding claims, wherein the at least one polybasic acid is selected from the group consisting of inorganic polybasic acids, dicarboxylic acids and polycarboxylic acids.

8. The CED coating compositions of claim 7, wherein the at least one polybasic acid is selected from the group consisting of boric acid, phosphoric acid, oxalic acid, citric acid and tartaric acid.

9. A process for the preparation of a CED coating layer comprising the steps:
a) cathodically electrodepositing a CED coating layer from a CED coating composition of anyone of the preceding claims onto an electrically conductive substrate and
b) thermally curing the CED coating layer electrodeposited in step a).

10. The process of claim 9, wherein the substrate is selected from the group consisting of automotive bodies and automotive body parts.
